(19)

Europäisches
Patentamt

European
Patent Office

Office européen
des brevets

(11) **EP 3 647 363 A1**

(12) **EUROPEAN PATENT APPLICATION**
published in accordance with Art. 153(4) EPC

(43) Date of publication:
06.05.2020  Bulletin 2020/19

(21) Application number: 18825168.0

(22) Date of filing: 29.06.2018

(51) Int Cl.:
**C08L 29/04** *(2006.01)*        **C08F 2/44** *(2006.01)*
**C08F 261/04** *(2006.01)*       **C08K 9/00** *(2006.01)*
**C08L 51/06** *(2006.01)*

(86) International application number:
**PCT/JP2018/024908**

(87) International publication number:
**WO 2019/004455 (03.01.2019 Gazette 2019/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  30.06.2017  JP 2017129345

(71) Applicant: **Kuraray Co., Ltd.**
**Kurashiki-shi, Okayama 710-0801 (JP)**

(72) Inventors:
• **AMANO, Yusuke**
  **Kurashiki-shi**
  **Okayama 710-0801 (JP)**
• **ISHIDA, Eiichi**
  **Okayama-shi**
  **Okayama 702-8601 (JP)**
• **MAEKAWA, Kazuhiko**
  **Kurashiki-shi**
  **Okayama 710-0801 (JP)**

(74) Representative: **Müller-Boré & Partner**
**Patentanwälte PartG mbB**
**Friedenheimer Brücke 21**
**80639 München (DE)**

(54) **RESIN COMPOSITION AND METHOD FOR PRODUCING SAME**

(57)    The present invention provides a resin composition satisfying both high crystallinity and excellent flexibility while ensuring desirable workability. The present invention relates to a resin composition comprising a vinyl alcohol polymer (A) and a copolymer (B), wherein the copolymer (B) comprises a vinyl alcohol polymer (B-1) and a diene polymer (B-2), and has a content ratio of 10 to 70 mass% with respect to a total mass of the vinyl alcohol polymer (A) and the copolymer (B), the resin composition having a powder or pellet form, and an average particle diameter of 50 to 4,000 $\mu$m.

**Description**

TECHNICAL FIELD

The present invention relates to a method for producing a resin composition satisfying both high crystallinity and excellent flexibility while ensuring desirable workability, and to a method for producing such a resin composition.

BACKGROUND ART

A vinyl alcohol resin has excellent coating properties (e.g., mechanical strength, oil resistance, film formability, oxygen gas barrier properties) and hydrophilicity owning to its high crystallinity, and has been used in a wide range of applications by taking advantage of these properties, for example, such as in emulsifiers, suspending agents, surfactants, textile finishing agents, various binders, paper processing agents, adhesives, and various packaging materials, sheets, and containers. However, a vinyl alcohol resin usually has a glass transition point higher than ordinary temperature, and the high crystallinity owning to this property poses drawbacks such as poor flexibility, weak flex resistance, and low reactivity, which can lead to serious problems depending on use. It is possible to overcome the low flexibility with the combined use of a plasticizer. However, this inevitably results in decrease of other properties such as mechanical and barrier properties as a result of a bleed out of the plasticizer, or serious impairment of crystallinity.

A method is proposed that chemically introduces a specific structure into a vinyl alcohol resin in the form of a graft chain. Patent Literature 1 describes an example of a polymer in which a synthetic rubber having incorporated therein a modified functional group introduced to its terminal is introduced as a graft chain via a reactive group through the reaction of the synthetic rubber in a dimethyl sulfoxide solution of vinyl alcohol resin.

Patent Literature 2 and Patent Literature 3 disclose methods for producing a graft copolymer by contacting a vinyl alcohol resin with butadiene after generating radicals on the vinyl alcohol resin with the use of ionizing radiation.

CITATION LIST

Patent Literature

    Patent Literature 1: WO2015/190029
    Patent Literature 2: JP 39-6386 UM-B
    Patent Literature 3: JP 41-21994 UM-B

SUMMARY OF INVENTION

Technical Problem

However, the graft copolymer described in Patent Literature 1 involves low crystallinity because of the synthetic rubber introduced. The graft copolymer may also suffer from insufficient flexibility when the volume ratio of the main chain moiety and the graft chain moiety is adjusted to maintain crystallinity. That is, it is not easy to satisfy both crystallinity and flexibility with the graft copolymer described in Patent Literature 1.

In the products produced by the methods described in Patent Literature 2 and Patent Literature 3, the resin tends to agglutinate during its shaping process, making the methods problematic in terms of workability. Patent Literature 2 and Patent Literature 3 also do not mention specific graft copolymerization conditions, and are unclear with regard to specific information concerning product structure and composition, and the physical properties attributed to these.

The present invention has been made to provide a solution to the foregoing problems, and it is an object of the present invention to provide a resin composition satisfying both high crystallinity and excellent flexibility while ensuring desirable workability, and a method for producing such a resin composition.

Solution to Problem

The present inventors conducted intensive studies to find a solution to the foregoing problems, and found that a resin composition of a powder or pellet form comprising a vinyl alcohol polymer (A) and a copolymer (B) satisfies both high crystallinity and excellent flexibility while ensuring desirable workability when the vinyl alcohol polymer (A) and the copolymer (B), the latter including a vinyl alcohol polymer (B-1) region and a diene polymer (B-2) region, are contained in specific proportions, and when the average particle diameter of the resin composition are controlled to fall within a specific range. The present invention was completed on the basis of this finding.

The present invention has provided a solution to the foregoing problems by providing:

[1] A resin composition comprising a vinyl alcohol polymer (A) and a copolymer (B), wherein the copolymer (B) comprises a vinyl alcohol polymer (B-1) region and a diene polymer (B-2) region, and has a content ratio of 10 to 70 mass% with respect to a total mass of the vinyl alcohol polymer (A) and the copolymer (B), the resin composition having a powder or pellet form, and an average particle diameter of 50 to 4,000 $\mu$m;

[2] The resin composition according to [1], wherein the resin composition further comprises a synthetic rubber (C) in an amount of 10 mass% or less;

[3] The resin composition according to [1], wherein the resin composition further comprises a synthetic rubber (C) in an amount of 0.1 mass% or less;

[4] The resin composition according to any one of [1] to [3], wherein the diene polymer (B-2) region in the copolymer (B) has a content ratio of 30 to 80 mass% with respect to a total mass of the vinyl alcohol polymer (B-1) region and the diene polymer (B-2) region in the copolymer (B);

[5] The resin composition according to any one of [1] to [4], wherein the copolymer (B) comprises a vinyl alcohol structure unit in a content ratio of 15 to 60 mass% with respect to all constituent structure units of the copolymer (B);

[6] The resin composition according to any one of [1] to [5], wherein the diene polymer (B-2) is at least one selected from the group consisting of polybutadiene, polyisoprene, and polyisobutylene;

[7] The resin composition according to any one of [1] to [6], wherein the diene polymer (B-2) is polyisoprene;

[8] The resin composition according to any one of [1] to [7], wherein part or all of the diene polymer (B-2) is directly bound to a carbon atom constituting the vinyl alcohol polymer (B-1);

[9] The resin composition according to any one of [1] to [8], wherein the vinyl alcohol polymer (B-1) is an ethylene-vinyl alcohol copolymer;

[10] The resin composition according to any one of [1] to [9], wherein the vinyl alcohol polymer (A) is an ethylene-vinyl alcohol copolymer;

[11] The resin composition according to any one of [1] to [10], wherein the copolymer (B) is a graft copolymer (B1);

[12] The resin composition according to any one of [1] to [11], wherein the resin composition has an average particle diameter of 90 to 3,300 $\mu$m;

[13] A method for producing a resin composition, comprising:

a step of applying an active energy ray to a vinyl alcohol polymer; and
a step of dispersing the vinyl alcohol polymer in a feedstock monomer of diene polymer (B-2) or in a solution comprising the monomer after the exposure to the active energy ray so as to perform graft polymerization, the method producing a resin composition that comprises a vinyl alcohol polymer (A) and a graft copolymer (B1), wherein the vinyl alcohol polymer (A) is an unreacted vinyl alcohol polymer after the graft polymerization, and the graft copolymer (B1) comprises a vinyl alcohol polymer (B-1) region and a diene polymer (B-2) region, the graft copolymer (B1) having a content ratio of 10 to 70 mass% with respect to a total mass of the vinyl alcohol polymer (A) and the graft copolymer (B1), the resin composition having a powder or pellet form, and an average particle diameter of 50 to 4,000 $\mu$m;

[14] The method according to [13], wherein the active energy ray is a 5 to 200 kGy electron beam;

[15] The method according to [13] or [14], wherein the method comprises a step of removing a synthetic rubber (C) after the graft polymerization step, and the synthetic rubber (C) has a content ratio of 0.1 mass% or less after the removal step.

Advantageous Effects of Invention

A resin composition of the present invention satisfies both high crystallinity and excellent flexibility while ensuring desirable workability. Specifically, a resin composition of the present invention satisfies various properties (mechanical strength or barrier properties) with its high crystallinity while remaining desirably flexible, and, because agglutination of resin is inhibited during the shaping process (particularly when forming into a strand), the resin composition can remain stable over extended time periods during its shaping process.

BRIEF DESCRIPTION OF DRAWINGS

FIG. 1 shows an atomic force micrograph (AFM) image of a cross section of a pressed film of a resin composition obtained in Example 1.
FIG. 2 shows an AFM image of a cross section of a pressed film of a resin composition obtained in Example 9.
FIG. 3 shows an AFM image of a cross section of a pressed film of a resin composition obtained in Comparative Example 5.

DESCRIPTION OF EMBODIMENTS

Resin Composition

A resin composition of the present invention comprises a vinyl alcohol polymer (A) and a copolymer (B), wherein the copolymer (B) comprises a vinyl alcohol polymer (B-1) region and a diene polymer (B-2) region, and has a content ratio of 10 to 70 mass% with respect to a total mass of the vinyl alcohol polymer (A) and the copolymer (B), the resin composition having a powder or pellet form, and an average particle diameter of 50 to 4,000 $\mu$m. In the present specification, the upper limits and lower limits of numeric ranges (ranges of, for example, contents of components, values calculated from components, and values of physical properties) can be combined appropriately.

In the present invention, the content ratio of the copolymer (B) is 10 to 70 mass% with respect to the total mass (100 mass%) of the vinyl alcohol polymer (A) and the copolymer (B). The flexibility of the resin composition seriously decreases when the content ratio is less than 10 mass%. The mechanical strength or barrier properties of the resin composition seriously decrease when the content ratio is more than 70 mass%. These decreases of physical properties occur as a result of the diene polymer (B-2) inhibiting crystallization of the vinyl alcohol polymer (B-1) in the copolymer (B). With the content ratio confined within the foregoing range, the vinyl alcohol polymer (A) serves as a matrix in the resin composition, and the resin composition of the present invention can satisfy desirable physical properties attributed to the crystallinity of the vinyl alcohol polymer (A) while ensuring excellent flexibility owning to the copolymer (B). The content ratio of the copolymer (B) is preferably 15 mass% or more, more preferably 20 mass% or more, even more preferably 25 mass% or more. The content ratio of the copolymer (B) is preferably 65 mass% or less, more preferably 60 mass% or less, even more preferably 55 mass% or less.

The resin composition of the present invention has a powder or pellet form with an average particle diameter of 50 to 4,000 $\mu$m. With the average particle diameter confined within the foregoing range, agglutination of resin can be inhibited during the shaping process (particularly when forming into a strand), and the resin composition can remain stable over extended time periods during its shaping process, while remaining desirably flexible. The average particle diameter is preferably 60 $\mu$m or more, more preferably 90 $\mu$m or more, even more preferably 100 $\mu$m or more. In view of reducing bulk density and improving transport efficiency, the average particle diameter is preferably 3,500 $\mu$m or less, more preferably 3,300 $\mu$m or less. In view of improving flexibility, the average particle diameter is even more preferably 3,000 $\mu$m or less. In the present invention, "average particle diameter" means a volume average particle diameter measured for particles or pellets of the resin composition dispersed in a solvent, using a light scattering method using a laser beam. The average particle diameter measurement method is as described in the Examples section below. A resin composition of an embodiment of the present invention comprises a vinyl alcohol polymer (A) and a graft copolymer (B1), wherein the graft copolymer (B1) comprises a vinyl alcohol polymer (B-1) region and a diene polymer (B-2) region, and has a content ratio of 10 to 70 mass% with respect to a total mass of the vinyl alcohol polymer (A) and the graft copolymer (B1), the resin composition having a powder or pellet form, and an average particle diameter of 50 to 4,000 $\mu$m.

Vinyl Alcohol Polymers (A) and (B-1)

The types of vinyl alcohol polymer (A) and vinyl alcohol polymer (B-1) are not particularly limited. However, preferred for use is, for example, polyvinyl alcohol or ethylene-vinyl alcohol copolymer, as follows. The vinyl alcohol polymer (A) and the vinyl alcohol polymer (B-1) may have the same or different properties, including polymer structure unit, viscosity-average degree of polymerization, and degree of saponification. Concerning each of the vinyl alcohol polymer (A) and the vinyl alcohol polymer (B-1), one polyvinyl alcohol or one ethylene-vinyl alcohol copolymer may be used alone, or two or more polyvinyl alcohol and/or two or more ethylene-vinyl alcohol copolymer may be used in combination. As used herein, "structure unit" in a polymer means a repeating unit of the polymer. For example, ethylene unit and vinyl alcohol unit are both structure units.

The viscosity-average degree of polymerization of the polyvinyl alcohol (as measured in compliance with JIS K 6726 (1994)) is not particularly limited, and is appropriately selected according to the number average molecular weight desired for the copolymer (B). However, the viscosity-average degree of polymerization is preferably 100 to 10,000, more preferably 200 to 7,000, even more preferably 300 to 5,000. The resin composition produced can have desirable mechanical strength with the viscosity-average degree of polymerization falling in these ranges.

The degree of saponification of the polyvinyl alcohol (as measured in compliance with JIS K 6726 (1994)) is not particularly limited. However, in view of desirable water solubility, the degree of saponification is preferably 50 mol% or more, more preferably 80 mol% or more, even more preferably 95 mol% or more, and may be 100 mol%.

The content ratio of the ethylene unit in the ethylene-vinyl alcohol copolymer is not particularly limited. However, in view of improving formability, flexibility, and waterfastness, the ethylene unit content ratio is preferably 10 to 60 mol%, more preferably 20 to 50 mol%. The content ratio of the ethylene unit in the ethylene-vinyl alcohol copolymer can be determined by $^1$H-NMR measurement.

The degree of saponification of the ethylene-vinyl alcohol copolymer is not particularly limited. However, in view of improving formability, flexibility, and waterfastness, the degree of saponification is preferably 90 mol% or more, more preferably 95 mol% or more, even more preferably 99 mol% or more, and may be 100 mol%. The degree of saponification of the ethylene-vinyl alcohol copolymer can be measured in compliance with JIS K 6726 (1994).

The melt flow rate (MFR; 210°C, load 2,160 g) of the ethylene-vinyl alcohol copolymer is not particularly limited, and is preferably 0.1 g/10 min or more, more preferably 0.5 g/10 min or more. The flexibility, waterfastness, and mechanical strength become desirable when the melt flow rate is 0.1 g/10 min or more. The upper limit of melt flow rate may adapt a commonly used value, and may be, for example, 25 g/10 min or less. The melt flow rate is a measured value determined at 210°C under a load of 2,160 g by using a melt indexer in compliance with ASTM D1238.

The ethylene-vinyl alcohol copolymer may comprise a structure unit derived from an unsaturated monomer, other than the ethylene unit, provided that such a structure unit is not detrimental to the effects of the present invention. In the ethylene-vinyl alcohol copolymer, the content ratio of such a structure unit derived from an unsaturated monomer is preferably 10 mol% or less, more preferably 5 mol% or less with respect to all constituent structure units of the ethylene-vinyl alcohol copolymer.

The polyvinyl alcohol and the ethylene-vinyl alcohol copolymer may comprise a structure unit other than the vinyl alcohol unit, the vinyl ester monomer, and the ethylene unit, provided that such a structure unit is not detrimental to the effects of the present invention. Examples of such a structure unit include structure units derived from: α-olefins such as propylene, n-butene, isobutylene, and 1-hexene (including ethylene in the case of polyvinyl alcohol); acrylic acid; unsaturated monomers having an acrylic acid ester group, such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid; unsaturated monomers having a methacrylic acid ester group, such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamides such as acrylamide, N-methylacrylamide, N-ethylacrylamide, N,N-dimethylacrylamide, diacetoneacrylamide, acrylamidopropane sulfonic acid, and acrylamidopropyl dimethylamine; methacrylamides such as methacrylamide, N-methylmethacrylamide, N-ethylmethacrylamide, methacrylamidopropane sulfonic acid, and methacrylamidopropyl dimethylamine; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyl vinyl ether, and 2,3-diacetoxy-1-vinyloxypropane; unsaturated nitriles such as acrylonitrile and methacrylonitrile; halogenated vinyls such as vinyl chloride and vinyl fluoride; halogenated vinylidenes such as vinylidene chloride and vinylidene fluoride; allyl compounds such as allyl acetate, 2,3-diacetoxy-1-allyloxypropane, and allyl chloride; unsaturated dicarboxylic acids such as maleic acid, itaconic acid, fumaric acid, and salts or esters thereof; vinyl silyl compounds such as vinyltrimethoxysilane; and isopropenyl acetate. The content ratio of the structure unit is preferably less than 10 mol% with respect to all constituent structure units of the polyvinyl alcohol or ethylene-vinyl alcohol copolymer.

The ethylene-vinyl alcohol copolymer is particularly preferred as vinyl alcohol polymer (A) and vinyl alcohol polymer (B-1). The heat formability of the resin composition of the present invention more easily improves by using the ethylene-vinyl alcohol copolymer.

Copolymer (B)

The copolymer (B) comprises a vinyl alcohol polymer (B-1) region and a diene polymer (B-2) region. The copolymer (B) is not particularly limited, as long as it is a copolymer having at least one vinyl alcohol polymer (B-1) region and at least one diene polymer (B-2) region. The copolymer (B) is, for example, a graft copolymer (B1) or a block copolymer (B2).

Graft Copolymer (B1)

The copolymer (B) is preferably a graft copolymer (B1). The structure of the graft copolymer (B1) is not particularly limited. However, the graft copolymer (B1) preferably comprises a main chain comprised of a vinyl alcohol polymer (B-1) region, and a side chain comprised of a diene polymer (B-2) region. That is, the graft copolymer (B1) is preferably one in which a side chain comprised of a diene polymer (B-2) region is introduced to a main chain comprised of a vinyl alcohol polymer (B-1) region. Particularly preferably, the graft copolymer (B1) is one in which a plurality of diene polymer (B-2) regions is bound to a single vinyl alcohol polymer (B-1) region. The type of vinyl alcohol polymer (B-1) is not particularly limited, and is preferably, for example, the polyvinyl alcohol or ethylene-vinyl alcohol copolymer mentioned above. The content ratio of the vinyl alcohol unit in the vinyl alcohol polymer (B-1) is preferably 40 mol% or more, and may be 50 mol% or more, or 55 mol% or more. Concerning the vinyl alcohol polymer (B-1), one polyvinyl alcohol or one ethylene-vinyl alcohol copolymer may be used alone, or two or more polyvinyl alcohol and/or two or more ethylene-vinyl alcohol copolymer may be used in combination.

Block Copolymer (B2)

When the copolymer (B) is a block copolymer (B2), the block copolymer (B2) has the vinyl alcohol polymer (B-1) region as a polymer block (b1), and the diene polymer (B-2) region as a polymer block (b2). The block copolymer (B2) may have one polymer block (b1) and one polymer block (b2), or two or more polymer blocks (b1) and/or polymer blocks (b2). The linkage of the block copolymer may be such that the block copolymer is, for example, a linear multiblock copolymer such as a b1-b2 diblock copolymer, a b1-b2-b1 triblock copolymer, a b2-b1-b2 triblock copolymer, a b1-b2-b1-b2 tetrablock copolymer, or a b2-b1-b2-b1 tetrablock copolymer, or a star-shaped (radial star-shaped) block copolymer represented by, for example, (b2-b1-)n or (b1-b2-)n. Here, n is a number greater than two.

Diene Polymer (B-2)

The copolymer (B) comprises a diene polymer (B-2). The structure of the diene polymer (B-2) is not particularly limited. It is, however, preferable that the diene polymer (B-2) have an olefin structure. With the diene polymer (B-2) having an olefin structure, the resin composition of the present invention can be crosslinked or vulcanized by high-energy radiation. Examples of the diene polymer (B-2) include polybutadiene, polyisoprene, polyisobutylene, polychloroprene, and polyfarnesene. The diene polymer (B-2) may be two or more of copolymers selected from butadiene, isoprene, isobutylene, chloroprene, and farnesene. Preferred for reactivity and flexibility are polybutadiene, polyisoprene, and polyisobutylene, more preferably polyisoprene. The copolymer (B) may comprise a structure unit other than the vinyl alcohol polymer (B-1) region and the diene polymer (B-2) region, provided that such a structure unit does not interfere with the effects of the present invention. The graft copolymer (B1) may comprise a structure unit other than the vinyl alcohol polymer (B-1) region and the diene polymer (B-2) region, provided that such a structure unit does not interfere with the effects of the present invention.

The resin composition of the present invention also excels in chemical durability (particularly alkali resistance). Preferably, the diene polymer (B-2) in the graft copolymer (B1) is present as a side chain, and part or all of the diene polymer (B-2) is directly bound to the constituent carbon atoms of the main chain comprised of the vinyl alcohol polymer (B-1) (preferably to the secondary or tertiary carbon atoms constituting the main chain). With part or all of the side chain directly bound to the secondary or tertiary carbon atoms, the resin composition of the present invention is more excellent in chemical durability (alkali resistance). For example, when the side chain is bound to the main chain via a reactive group, the chemical durability of the resin composition of the present invention tends to decrease because of the low chemical durability at the bond portions.

In the copolymer (B), the content ratio of the diene polymer (B-2) region with respect to the total mass of the vinyl alcohol polymer (B-1) region and the diene polymer (B-2) region is not particularly limited, and is preferably 30 mass% or more, more preferably 40 mass% or more, even more preferably 45 mass% or more. The content ratio of diene polymer (B-2) region is preferably 80 mass% or less, more preferably 75 mass% or less, even more preferably 70 mass% or less. When the content ratio is 30 mass% or more, the copolymer (B) (graft copolymer (B1) in particular) can more easily produce the desired flexibility and reactivity. When the content ratio is 80 mass% or less, the compatibility between vinyl alcohol polymer (A) and copolymer (B) tend to improve, and impairment of transparency and various physical properties due to formation of coarse phase separation becomes less likely to occur.

The content ratio of the vinyl alcohol unit comprised in the copolymer (B) is preferably 15 to 60 mass% with respect to the total mass of the vinyl alcohol polymer (B-1) region and the diene polymer (B-2) region. When the content ratio of vinyl alcohol unit is 15 mass% or more, transparency improves as a result of improved compatibility between vinyl alcohol polymer (A) and copolymer (B). When the content ratio of vinyl alcohol unit is 60 mass% or less, the vinyl alcohol polymer (A) and the copolymer (B) become moderately compatible, and decrease of matrix crystallinity due to excessive compatibility, and the associated impairment of physical properties become less likely to occur. The content ratio of vinyl alcohol unit is more preferably 17 to 50 mass%, even more preferably 18 to 45 mass%, particularly preferably 20 to 40 mass%. The method for measuring the content ratio of vinyl alcohol unit is as described in the Examples section below.

In the graft copolymer (B1), it is preferable that the side chain comprised of the diene polymer (B-2) region have a molecular weight distribution. With a molecular weight distribution in the side chain comprised of the diene polymer (B-2) region, the compatibility between vinyl alcohol polymer (A) and graft copolymer (B1) readily improves, and the transparency of a shaped product tends to increase.

The resin composition of the present invention may additionally comprise a synthetic rubber (C), provided that such addition does not interfere with the effects of the present invention. The synthetic rubber (C) may or may not include the same constituent unit contained in the diene polymer (B-2). The synthetic rubber (C) may be a synthetic rubber that occur in the production of the copolymer (B), or may be a synthetic rubber separately added in the production of the resin composition of the present invention. The content ratio of the synthetic rubber (C) in the resin composition is preferably 10 mass% or less. When the content ratio is more than 10 mass%, the resin tends to agglutinate even in the resin composition having the foregoing average particle diameters. The content ratio of synthetic rubber (C) is more preferably 7 mass% or less, even more preferably 3 mass% or less. In view of further improving formability, the content ratio of synthetic rubber (C) is particularly preferably 0.1 mass% or less.

In view of further improving flexibility, the total degree of modification of the resin composition of the present invention is preferably 1.0 to 30 mol%, more preferably 5.0 to 25 mol%, even more preferably 8.0 to 20 mol%. As used herein, "total degree of modification of resin composition" means the content of monomers after graft polymerization relative to all monomer units of the resin composition. Specifically, the total degree of modification of resin composition is calculated by using the method described in Examples. In the calculation of the total degree of modification of resin composition, the resin composition is intended to mean a resin composition comprising a vinyl alcohol polymer (A) and a copolymer (B). When the resin composition comprises other components (e.g., synthetic rubber (C), a colorant, an antioxidant), the total degree of modification of the resin composition is calculated by excluding these other components.

The resin composition of the present invention has a crystal melting temperature of preferably 140°C or more. With a crystal melting temperature of 140°C or more, the resin composition can more easily develop excellent mechanical strength and high barrier properties. The resin composition has a crystal melting temperature of preferably 200°C or less. With a crystal melting temperature of 200°C or less, high temperature is not required for the shaping process, and thermal degradation of resin becomes less likely to occur.

The resin composition of the present invention may comprise components other than the foregoing components, provided that such additional components do not interfere with the effects of the present invention. Examples of such additional components include a colorant, an antioxidant, a light stabilizer, a vulcanizing agent and a vulcanization accelerator, and an inorganic additive (e.g., silica).

Resin Composition Producing Method

The method of production of the resin composition of the present invention is not particularly limited. In an exemplary method, a radical is generated on a main chain of a vinyl alcohol polymer using any of commonly known various graft polymerization methods to introduce a graft chain and produce a graft copolymer (B1), and the graft copolymer (B1) so obtained is mixed with a vinyl alcohol polymer (A) to make a desired composition. Examples of the graft polymerization methods include a method that achieves graft polymerization through radical polymerization with the use of a polymerization initiator; and a graft polymerization method that makes use of active energy rays (hereinafter referred to as "active-energy-ray graft polymerization method"). Preferred for use is the active-energy-ray graft polymerization method. Specifically, preferred as a method that produces a resin composition using the active-energy-ray graft polymerization method is a method that comprises: a step of applying an active energy ray to a vinyl alcohol polymer (B-1) in advance to generate a radical; and a step of dispersing the vinyl alcohol polymer (B-1) in a feedstock monomer of diene polymer (B-2) or in a solution comprising the monomer so as to perform graft polymerization. The product of this method is a mixture of an unreacted vinyl alcohol polymer (B-1) and the graft copolymer (B1), and the unreacted vinyl alcohol polymer (B-1) corresponds to the vinyl alcohol polymer (A). That is, the method enables production of the resin composition of the present invention only in one step. The molecular weight of the side chain of the graft copolymer (B1) produced by the method is not uniform, and has a molecular weight distribution. The vinyl alcohol polymer (A) may be added to the resin composition produced by the resin composition producing method that uses the active-energy-ray graft polymerization method, if need be.

It has been confirmed that applying active energy rays to the vinyl alcohol polymer (B-1) generates a radical at least on the carbon atom of the methine group of the vinyl alcohol unit. Accordingly, radical polymerization of the feedstock monomer of diene polymer (B-2), starting at the carbon atom of the methine group, generates a graft copolymer (B1) in which the side chain comprised of the diene polymer (B-2) region is directly bound to the tertiary carbon atom of the main chain comprised of the vinyl alcohol polymer (B-1) region. Applying active energy rays to the ethylene-vinyl alcohol copolymer should also generate a radical on the carbon atom of the methylene group of the ethylene unit. Presumably, radical polymerization of the feedstock monomer of diene polymer (B-2), starting at the carbon atom of the methylene group, generates a graft copolymer (B1) in which the side chain comprised of the diene polymer (B-2) region is directly bound to the secondary carbon atom of the main chain comprised of the vinyl alcohol polymer (B-1) region.

In the producing method of the present invention, it is preferable that active energy rays be applied to a vinyl alcohol polymer (B-1) having a moisture content of 15 mass% or less. The moisture content is preferably 5 mass% or less, even more preferably 3 mass% or less. With a moisture content of 15 mass% or less, the radicals generated on the vinyl alcohol polymer (B-1) become less likely to be lost, making the vinyl alcohol polymer (B-1) sufficiently reactive to the feedstock monomer of diene polymer (B-2). In the producing method of the present invention, it is preferable that active energy rays be applied to a vinyl alcohol polymer (B-1) having a moisture content of 0.001 mass% or more. The moisture content is more preferably 0.01 mass% or more, even more preferably 0.05 mass% or more.

Examples of the active energy rays applied to the vinyl alcohol polymer (B-1) include ionizing radiation such as α rays, β rays, γ rays, an electron beam, and ultraviolet rays; and x line, g line, i line, and an excimer laser. Of these, ionizing radiation is preferred, and an electron beam and γ rays are more preferred for practicality. An electron beam is even more preferred for its advantage of accelerating the process and simplifying the equipment.

The radiation dose of active energy ray on the vinyl alcohol polymer (B-1) is preferably 5 to 200 kGy, more preferably 10 to 150 kGy, even more preferably 20 to 100 kGy, particularly preferably 30 to 90 kGy. With a radiation dose of 5 kGy or more, it becomes easier to introduce the side chain in sufficient amounts. Aside from having a cost advantage, a radiation dose of 200 kGy or less makes it easier to prevent deterioration of vinyl alcohol polymer (B-1) due to exposure to active energy rays.

The shape of vinyl alcohol polymer (B-1) is not particularly limited. However, the vinyl alcohol polymer (B-1) preferably has a powder or pellet form with an average particle diameter of 50 to 4,000 μm. With such a shape, the vinyl alcohol polymer (B-1) is able to more efficiently contact the feedstock monomer of synthetic rubber or a solution comprising the monomer, and the reaction rate tends to increase. An average particle diameter of 50 μm or more helps reduce scattering of powder. With an average particle diameter of 4,000 μm or less, the reaction rate tends to increase. The average particle diameter is more preferably 60 to 3,500 μm, even more preferably 80 to 3,000 μm. The average particle diameter can be measured with a laser diffractometer LA-950V2 manufactured by Horiba Ltd., as will be described later in the Examples below.

When graft polymerization is carried out by dispersing the vinyl alcohol polymer (B-1) in a solution of the feedstock monomer of diene polymer (B-2) after exposure to active energy rays, the dispersion solvent used needs to be a solvent that dissolves the feedstock monomer of diene polymer (B-2) but does not dissolve the vinyl alcohol polymer (B-1) exposed to active energy rays. If the solvent is a solvent that dissolves the vinyl alcohol polymer (B-1) exposed to active energy rays, graft polymerization proceeds simultaneously with deactivation of radicals generated on the vinyl alcohol polymer (B-1). This makes it difficult to control the amount of monomer added. Examples of the dispersion solvent used for the graft polymerization include water; lower alcohols such as methanol, ethanol, and isopropanol; ethers such as tetrahydrofuran, dioxane, and diethyl ether; ketones such as acetone and methyl ethyl ketone; amides such as dimethylformamide and dimethylacetoamide; toluene, and hexane. When using water, water may be used with a surfactant or the like, as required, to disperse the monomer. The solvent may be a combination of two or more of these solvents.

In the graft polymerization process, the vinyl alcohol polymer (B-1) exposed to active energy rays swells, allowing the feedstock monomer of diene polymer (B-2) to permeate into the vinyl alcohol polymer (B-1), and enabling introduction of a large amount of the side chain comprised of the diene polymer (B-2) region. It is accordingly preferable to choose a dispersion solvent by taking into consideration its affinity to the vinyl alcohol polymer exposed to active energy rays. Among the dispersion solvents exemplified above, lower alcohols such as methanol, ethanol, and isopropanol have high affinity to vinyl alcohol polymer (B-1) exposed to active energy rays, and are preferred for use in the producing method of the present invention. For the same reason, it is also effective to use a mixture of the foregoing dispersion solvents as a liquid medium, provided that the vinyl alcohol polymer (B-1) exposed to active energy rays does not dissolve in such a mixture. When the affinity of the liquid medium to the vinyl alcohol polymer is excessively high, the resin after the reaction swells to such a striking extent as to make isolation difficult by means of filtration, and increase the chance of homopolymerization of the feedstock monomer of diene polymer (B-2). It is accordingly preferable to appropriately choose a dispersion solvent, taking into consideration its affinity to the vinyl alcohol polymer used, and the swellability at the reaction temperature described later.

The amount of the feedstock monomer of diene polymer (B-2) used for graft polymerization is appropriately adjusted according to the monomer reactivity. As mentioned above, the reactivity depends on factors such as ease of permeation of the monomer into the vinyl alcohol polymer. Accordingly, the appropriate monomer amount varies with conditions such as the type or amount of dispersion solvent, and the degree of polymerization or degree of saponification of vinyl alcohol polymer (B-1). It is, however, preferable that the monomer be used in an amount of 1 to 1,000 parts by mass relative to 100 parts by mass of the vinyl alcohol polymer (B-1) exposed to active energy rays. With the amount of the feedstock monomer of diene polymer (B-2) confined in this range, the proportions of the vinyl alcohol polymer (B-1) and the diene polymer (B-2) in the graft copolymer (B1) can more easily be controlled to fall within the foregoing range. The monomer amount is more preferably 2 to 900 parts by mass, even more preferably 5 to 800 parts by mass.

The amount of the liquid medium used for graft polymerization is preferably 100 to 4,000 parts by mass, more preferably 200 to 2,000 parts by mass, even more preferably 300 to 1,500 parts by mass relative to 100 parts by mass of the vinyl alcohol polymer (B-1) exposed to active energy rays.

The reaction temperature in graft polymerization is preferably 20°C to 150°C, more preferably 30°C to 120°C, even more preferably 40°C to 100°C. With a reaction temperature of 20°C or more, the graft polymerization reaction proceeds more easily. With a reaction temperature of 150°C or less, the vinyl alcohol polymer (B-1) does not easily undergo thermal melting. When the boiling point of the feedstock monomer of diene polymer (B-2), or the boiling point of the liquid medium is lower than the reaction temperature, the reaction may be carried out under applied pressure in a pressure tight vessel such as an autoclave.

The reaction time of graft polymerization is preferably no longer than 10 hours, more preferably no longer than 8 hours, even more preferably no longer than 6 hours. With a reaction time not exceeding 10 hours, it becomes easier to inhibit homopolymerization of the feedstock monomer of diene polymer (B-2).

The resin composition of the present invention can be used in a wide range of applications, including, for example, shaped articles (e.g., films, sheets, boards, and fibers), multilayer structures (e.g., inner liners for tires), additives (e.g., additives for tires), compatibilizing agents, coating agents, barrier materials, sealing agents (e.g., metal sealants), and adhesives.

The present invention encompasses combinations of the foregoing features, provided that such combinations made in various forms within the technical idea of the present invention can produce the effects of the present invention.

EXAMPLES

The following describes the present invention in greater detail by way of Examples. It should be noted, however, that the present invention is in no way limited by the following Examples, and various changes may be made by a person with ordinary skill in the art within the technical idea of the present invention. In the following Examples and Comparative Examples, "%" and "part(s)" mean "mass%" and "part(s) by mass", respectively, unless otherwise specifically stated.

Calculation of Content Ratio (Mass%) of Graft Copolymer (B1) with respect to Total Mass of Vinyl Alcohol Polymer (A) and Graft Copolymer (B1)

A resin composition obtained through graft polymerization reaction (described later) was added to an extraction solvent (water in the case of polyvinyl alcohol, and a 4:6 mixture of water and isopropanol (mass ratio) in the case of ethylene-vinyl alcohol copolymer), and an extraction process was carried out at 80°C for 3 hours. After evaporating the extractant, the mass of the resulting extract, and the mass of the unextracted residue were measured. The mass of the extract is the mass (represented by "Wa") of the vinyl alcohol polymer (A) contained in the resin composition, and the mass of the unextracted residue is the mass (represented by "Wb") of the graft copolymer (B1) contained in the resin composition. The measured values were used to calculate the mass ratio (A)/(B1), and the content ratio (mass%) of graft copolymer (B1) with respect to the total 100 parts by mass of vinyl alcohol polymer (A) and graft copolymer (B1). A $^1$H-NMR analysis of the extract confirmed that the extract from the extraction process was solely vinyl alcohol polymer (A), and did not contain graft copolymer (B1). For the resin compositions obtained in Examples 12 and 13, Wa and Wb were calculated in the same manner after removing the synthetic rubber (C) by using the procedure used in Example 1.

Calculation of Mass Ratio of Diene Polymer (B-2) with respect to Total Mass of Vinyl Alcohol Polymer (B-1) Region and Diene Polymer (B-2) Region

The mass difference between Wab and the mass of the vinyl alcohol polymer (B-1) used for reaction is Wq, where Wab is the mass of the resin composition obtained in each Example. (In Examples 12 and 13, the calculation was made after removing the synthetic rubber (C) from the resin composition by using the same procedure used in Example 1.) The difference between Wab and Wa (Wab-Wa) is the mass Wb of graft copolymer (B1), where Wa is the mass of the vinyl alcohol polymer (A) in the resin composition calculated according to the foregoing method. The mass ratio of the side chain comprised of the diene polymer (B-2) region with respect to the total mass of the main chain comprised of the vinyl alcohol polymer (B-1) region and the side chain comprised of the diene polymer (B-2) region was calculated by using Wb-Wq as the mass of the main chain comprised of the vinyl alcohol polymer (B-1) region, and Wq is the mass of the side chain comprised of the diene polymer (B-2) region.

Calculation of Total Degree of Modification

When Vinyl Alcohol Polymer (A) and Vinyl Alcohol Polymer (B-1) are Polyvinyl Alcohol

For calculations, the mass% of the vinyl acetate unit in the feedstock polyvinyl alcohol was denoted as $a^1$, and the mass% of the vinyl alcohol unit was denoted as $b^1$. The total degree of modification (the content of monomers that underwent graft polymerization, relative to all monomer units of the resin composition) was calculated using the formula below. When the resin compositions obtained in the Examples contained synthetic rubber (C), the total degree of modification was calculated after removing the synthetic rubber (C) by using the washing procedure described below.

$$\text{Degree of modification [mol\%]} = Z^1/(X^1 + Y^1 + Z^1) \times 100$$

In the formula, $X^1$, $Y^1$, and $Z^1$ are values calculated as follows.

$$X^1 = \{(\text{feedstock polyvinyl alcohol (parts by mass)}) \times (a^1/100)\}/86$$

$$Y^1 = \{(\text{feedstock polyvinyl alcohol (parts by mass)}) \times (b^1/100)\}/44$$

$$Z^1 = \{(\text{resin composition after reaction (parts by mass)}) - (\text{feedstock polyvinyl alcohol (parts by mass)})\}/(\text{molecular weight of monomer subjected to graft polymerization})$$

When Vinyl Alcohol Polymer (A) and Vinyl Alcohol Polymer (B-1) are Ethylene-Vinyl Alcohol Copolymer
For calculations, the mass% of the ethylene unit in the feedstock ethylene-vinyl alcohol copolymer was denoted as $a^2$, and the mass% of the vinyl alcohol unit was denoted as $b^2$. The total degree of modification (the content of monomers that underwent graft polymerization, relative to all monomer units of the resin composition) was calculated using the formula below. When the resin compositions obtained in the Examples contained synthetic rubber (C), the total degree of modification was calculated after removing the synthetic rubber (C) by using the washing procedure described below.

$$\text{Degree of modification [mol\%]} = Z^2/(X^2 + Y^2 + Z^2) \times 100$$

In the formula, $X^2$, $Y^2$, and $Z^2$ are values calculated as follows.

$$X^2 = \{(\text{feedstock ethylene-vinyl alcohol copolymer (parts by mass)}) \times (a^2/100)\}/28$$

$$Y^2 = \{(\text{feedstock ethylene-vinyl alcohol copolymer (parts by mass)}) \times (b^2/100)\}/44$$

$$Z^2 = \{(\text{resin composition after reaction (parts by mass)}) - (\text{feedstock ethylene-vinyl alcohol copolymer (parts by mass)})\}/(\text{molecular weight of monomer subjected to graft polymerization})$$

Calculation of Content Ratio of Vinyl Alcohol Unit Contained in Graft Copolymer (B1)

Calculations were made according to the following formulae, using Wb (mass of graft copolymer (B1)), Wb-Wq (mass of the main chain comprised of vinyl alcohol polymer in graft copolymer (B1)), $b^1$ (mass% of vinyl alcohol unit in polyvinyl alcohol), and $b^2$ (mass% of vinyl alcohol unit in ethylene-vinyl alcohol copolymer).
When vinyl alcohol polymer (B-1) is polyvinyl alcohol:

$$\text{Content ratio of vinyl alcohol unit [\%]} = \{(Wb - Wq) \times b^1/100\}/Wb \times 100$$

When vinyl alcohol polymer (B-1) is ethylene-vinyl alcohol copolymer:

$$\text{Content ratio of vinyl alcohol unit [\%]} = \{(Wb - Wq) \times b^2/100\}/Wb \times 100$$

Calculation of Average Particle Diameter

The resin composition was measured for volume average particle diameter in a dispersed state in methanol, using a laser diffractometer LA-950V2 manufactured by Horiba Ltd.

Evaluation of Thermal Properties

The resin compositions obtained in Examples and Comparative Examples were measured for thermal properties at a rate of temperature increase and decrease of 10°C/min within a temperature range of 0°C to 240°C, using a differential scanning calorimeter Q1000 manufactured by TA Instruments. The value from the second heating was taken as crystal melting temperature (Tm).

Method of Formation of Resin Composition Film

When Vinyl Alcohol Polymer (A) and Vinyl Alcohol Polymer (B-1) are Polyvinyl Alcohol

Seventy parts by mass of each resin composition obtained in Examples and Comparative Examples was blended into thirty parts by mass of glycerin, and these were melted and kneaded at 200°C for 3 minutes using a Labo Plastomill. The melt was then cooled and solidified to obtain a compound. The compound was then pressed at 200°C for 120 seconds to make a pressed film having a thickness of 100 $\mu$m. The pressed film was immersed in a mixed solvent of 80 parts by mass ethanol and 20 parts by mass water to extract glycerin, and dried overnight in a 40°C vacuum drier to obtain a resin composition film.

When Vinyl Alcohol Polymer (A) and Vinyl Alcohol Polymer (B-1) are Ethylene-Vinyl Alcohol Polymer

The resin composition was melted and kneaded at 200°C for 3 minutes using a Labo Plastomill, and the melt was cooled and solidified to obtain a compound. The compound was then pressed at 200°C for 120 seconds to make a pressed film having a thickness of 100 $\mu$m. The pressed film was immersed in a mixed solvent of 80 parts by mass ethanol and 20 parts by mass water to extract glycerin, and dried overnight in a 40°C vacuum drier to obtain a resin composition film.

Observation of Film Cross Section Morphology

A film was produced from each resin composition obtained in Examples and Comparative Examples, using the same resin composition film formation method described above. The film was then cut at -60°C using an Ultramicrotome EM UC7 manufactured by Leica, and a glass knife. The morphology of the film cross section was observed under the following conditions, using an Environment Control Unit E-Sweep, a scanning probe microscope manufactured by Hitachi High-Tech Science Corporation.
Measurement mode: DFM mode
Cantilever used: SI-DF20
Number of X-Y data: 512/256
Measurement temperature: 22°C
Measurement humidity: 40% RH

Shape Stability Evaluation

The resin compositions obtained in Example and Comparative Example were extruded into a strand shape (single yarn, diameter 2 mm) at an ejection rate of 3 kg/hr using a biaxial extruder ($\phi$ = 25 mm, 100 rpm, process temperature 200°C, die temperature 220°C). During a 3-hour continuous shaping process, the number of breaks in the strand caused by a feed failure due to agglutination of the resin composition was counted. Resin compositions with fewer strand break counts were determined as having more desirable shape stability.

OTR Evaluation

A film was produced from the resin compositions obtained in Examples and Comparative Examples, using the same film formation method used in Examples and Comparative Examples. The film was moisturized for 3 days under 20°C, 85% RH conditions, and the rate of oxygen permeation was measured under the same conditions, using an oxygen permeation measurement device (OX-TORAN 2/21 manufactured by MOCON Inc.). For the evaluation of barrier properties, only the film produced from the resin composition of Example 4 was irradiated with an electron beam (150 kGy) before evaluation. The results are presented in Table 2.
Temperature: 20°C
Humidity on oxygen supply side: 85% RH
Humidity on carrier gas side: 85% RH
Oxygen pressure: 1.0 atm
Carrier gas pressure: 1.0 atm

Adhesiveness Evaluation

A resin composition film (X) was produced from the resin compositions obtained in Examples and Comparative Examples, using the same resin composition film formation method described above. A 1 mm-thick carcass-blended unvulcanized rubber (Y) for automobile tire was used as adherend. The film (X) was sandwiched between two sheets of rubber (Y), and two sheets of polyester net (Z), each measuring 0.37 mm in thickness and having been treated with RFL (Resorcin Formalin Latex), were placed on both sides of the rubber sheets. These were then heated to 170°C, and bonded at 0 kgf (no applied pressure), using a compression molding machine. The resulting specimen was cut into strip shapes each measuring 15 mm in width and 100 mm in length. With the (Y) and (Z) portions of the bonded specimen chucked with an Autograph AG-5000B (Shimadzu Corporation), the specimen was pulled apart in the shape of the letter T to measure tensile bond strength (stress before break) (load cell 1 kN, pull rate 250 mm/min, distance between chucks 70 mm). The results are presented in Table 3. The values shown in the table are mean values after five measurements.

Evaluation of Tensile Elastic Modulus

When Vinyl Alcohol Polymer (A) and Vinyl Alcohol Polymer (B-1) are Polyvinyl Alcohol

A film was produced from the resin compositions obtained in Examples and Comparative Examples, using the same resin composition film formation method described above. The film was cut into a dumbbell shape measuring 10 mm in width, and was moisturized in a 20°C, 30% RH storage environment for 1 week. The film was then measured for tensile elastic modulus using an Autograph AG-5000B (Shimadzu Corporation) (load cell 1 kN, pull rate 500 mm/min, distance between chucks 70 mm). The tensile elastic modulus was also measured after irradiating the film with an electron beam (150 kGy), in the same manner as when an electron beam was not applied. The results are presented in Table 4. The values shown in the table are mean values after five measurements.

When Vinyl Alcohol Polymer (A) and Vinyl Alcohol Polymer (B-1) are Ethylene-Vinyl Alcohol Polymer

A film was produced from the resin compositions obtained in Examples and Comparative Examples, using the same resin composition film formation method described above. The pressed film was immersed in a mixed solvent of 80 parts by mass ethanol and 20 parts by mass water to extract glycerin, and dried overnight in a 40°C vacuum drier to obtain a resin composition film. The film was cut into a dumbbell shape measuring 10 mm in width, and was moisturized under 20°C, 70% RH conditions for 1 week. The film was then measured for tensile elastic modulus using an Autograph AG-5000B (Shimadzu Corporation) (load cell 1 kN, pull rate 500 mm/min, distance between chucks 70 mm). The tensile elastic modulus was also measured after irradiating the film with an electron beam (150 kGy), in the same manner as when an electron beam was not applied. The results are presented in Table 4. The values shown in the table are mean values after five measurements.

Chemical Durability Test

A film was produced from the resin compositions obtained in Examples and Comparative Examples, using the same resin composition film formation method described above. The film was immersed in a 1 N sodium hydroxide aqueous solution that had been heated to 80°C. The film was taken out after 3 hours, and was washed by being immersed in deionized water. After repeating the washing procedure a total of two times, the film was immersed in tetrahydrofuran that had been heated to 50°C, and was taken out after 30 minutes. After repeating this procedure a total of three times, the film was dried overnight in an 80°C vacuum drier, and evaluated for elastic modulus using the method described above. The results of elastic modulus evaluations before and after the film was immersed in the sodium hydroxide aqueous solution in the chemical durability test are presented in Table 5.

Example 1

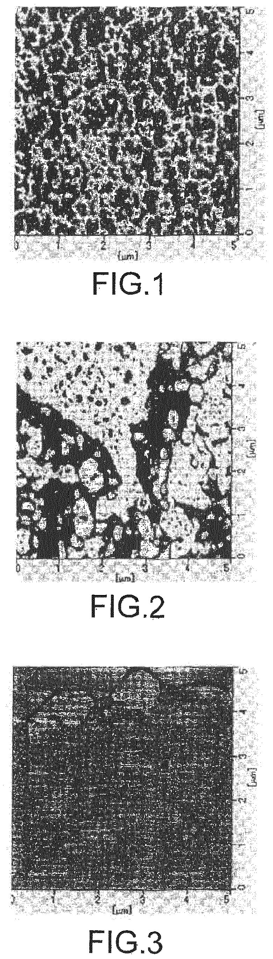

A commercially available ethylene-vinyl alcohol copolymer (F101 manufactured by Kuraray Co., Ltd.; content ratio of ethylene unit = 32 mol%, mass fraction of ethylene = 23.0 mass%, mass fraction of vinyl alcohol = 77.0 mass%, MFR of 3.8 g/10 min (210°C, load 2,160 g)) was pulverized, and shaken with a 425-$\mu$m mesh sieve and a 710-$\mu$m mesh sieve. The particles trapped between these sieves as a result of shaking were collected to obtain classified particles. An electron beam (30 kGy) was applied to 100 parts by mass of the particles (a moisture content of 0.5 mass%) in a nitrogen atmosphere. Separately, 570 parts by mass of isoprene was charged into an autoclave equipped with a stirrer, a nitrogen conduit, and a particle inlet, and the system was replaced with nitrogen for 30 minutes with nitrogen bubbling taking place in an ice-cooled state. Thereafter, 100 parts by mass of the ethylene-vinyl alcohol copolymer particles exposed to the electron beam were added into the autoclave, which was then sealed, and heated until the internal temperature reached 65°C. In a dispersed state in the isoprene solution, the copolymer particles were stirred under the heat of 65°C for 4 hours to perform graft polymerization. After collecting the particles by filtration, the particles were dried overnight at 40°C in a vacuum. The dried particles were added to 40°C tetrahydrofuran, washed for 15 minutes with stirring, and filtered. This washing procedure was repeated a total of ten times. In this procedure, extraction of polyisoprene was confirmed by $^1$H-NMR analysis of the extract. No extract was confirmed after the seventh and subsequent washing runs. That is, there was no residual polyisoprene in the particles. This produced the desired resin composition containing ethylene-vinyl alcohol copolymer and graft copolymer. The result of composition calculation, the result of average particle diameter analysis, and the result of physical property evaluation are presented in Table 1. FIG. 1 shows an atomic force micrograph (AFM) image of a cross section of a pressed film produced from the resin composition by using the method described above.

Example 2

A commercially available ethylene-vinyl alcohol copolymer (F101 manufactured by Kuraray Co., Ltd.; content ratio of ethylene unit = 32 mol%, mass fraction of ethylene = 23.0 mass%, mass fraction of vinyl alcohol = 77.0 mass%, MFR of 3.8 g/10 min (210°C, load 2,160 g)) was pulverized, and shaken with a 75-$\mu$m mesh sieve and a 212-$\mu$m mesh sieve. The particles trapped between these sieves as a result of shaking were collected to obtain classified particles. An electron beam (30 kGy) was applied to 100 parts by mass of the particles (a moisture content of 0.5 mass%) in a nitrogen atmosphere. Separately, 57 parts by mass of isoprene and 960 parts by mass of methanol were charged into an autoclave equipped with a stirrer, a nitrogen conduit, and a particle inlet, and the system was replaced with nitrogen for 30 minutes with nitrogen bubbling taking place in an ice-cooled state. Thereafter, 100 parts by mass of the ethylene-vinyl alcohol copolymer exposed to the electron beam was added into the autoclave, which was then sealed, and heated until the internal temperature reached 65°C. In a dispersed state in the solution, the copolymer particles were stirred under the heat of 65°C for 4 hours to perform graft polymerization. After collecting the particles by filtration, the particles were dried overnight at 40°C in a vacuum. The dried particles were added to 40°C tetrahydrofuran, washed for 15 minutes with stirring, and filtered. This washing procedure was repeated a total of ten times. In this procedure, extraction of only the polyisoprene was confirmed by $^1$H-NMR analysis of the extract. No extract was confirmed after the fourth and subsequent washing runs. That is, there was no residual polyisoprene in the particles. This produced the desired resin composition containing ethylene-vinyl alcohol copolymer and graft copolymer. The result of composition calculation, the result of average particle diameter analysis, and the result of physical property evaluation are presented in Table 1.

Example 3

A commercially available ethylene-vinyl alcohol copolymer (F101 manufactured by Kuraray Co., Ltd.; content ratio of ethylene unit = 32 mol%, mass fraction of ethylene = 23.0 mass%, mass fraction of vinyl alcohol = 77.0 mass%, MFR of 3.8 g/10 min (210°C, load 2,160 g)) was pulverized, and shaken with a 75-$\mu$m mesh sieve and a 212-$\mu$m mesh sieve. The particles trapped between these sieves as a result of shaking were collected to obtain classified particles. An electron beam (30 kGy) was applied to 100 parts by mass of the particles (a moisture content of 0.5 mass%) in a nitrogen atmosphere. Separately, 136 parts by mass of isoprene and 900 parts by mass of methanol were charged into an autoclave equipped with a stirrer, a nitrogen conduit, and a particle inlet, and the system was replaced with nitrogen for 30 minutes with nitrogen bubbling taking place in an ice-cooled state. Thereafter, 100 parts by mass of the ethylene-vinyl alcohol copolymer exposed to the electron beam was added into the autoclave, which was then sealed, and heated until the internal temperature reached 65°C. In a dispersed state in the solution, the copolymer particles were stirred under the heat of 65°C for 4 hours to perform graft polymerization. After collecting the particles by filtration, the particles were dried overnight at 40°C in a vacuum. The dried particles were added to 40°C tetrahydrofuran, washed for 15 minutes with stirring, and filtered. This washing procedure was repeated a total of ten times. In this procedure, extraction of only the polyisoprene was confirmed by $^1$H-NMR analysis of the extract. No extract was confirmed after the fifth and subsequent washing runs. That is, there was no residual polyisoprene in the particles. This produced the desired resin composition containing ethylene-vinyl alcohol copolymer and graft copolymer. The result of composition calculation, the result of average particle diameter analysis, and the result of physical property evaluation are presented in Table 1.

Example 4

A commercially available ethylene-vinyl alcohol copolymer (E105 manufactured by Kuraray Co., Ltd.; content ratio of ethylene unit = 44 mol%, mass fraction of ethylene = 33.3 mass%, mass fraction of vinyl alcohol = 66.7 mass%, MFR of 13.0 g/10 min (210°C, load 2,160 g)) was pulverized, and shaken with a 212-$\mu$m mesh sieve and a 425-$\mu$m mesh sieve. The particles trapped between these sieves as a result of shaking were collected to obtain classified particles. An electron beam (30 kGy) was applied to 100 parts by mass of the particles (a moisture content of 0.6 mass%) in a nitrogen atmosphere. Separately, 540 parts by mass of isoprene was charged into an autoclave equipped with a stirrer, a nitrogen conduit, and a particle inlet, and the system was replaced with nitrogen for 30 minutes with nitrogen bubbling taking place in an ice-cooled state. Thereafter, 100 parts by mass of the ethylene-vinyl alcohol copolymer exposed to the electron beam was added into the autoclave, which was then sealed, and heated until the internal temperature reached 65°C. In a dispersed state in the isoprene solution, the copolymer particles were stirred under heat for 4 hours to perform graft polymerization. After collecting the particles by filtration, the particles were dried overnight at 40°C in a vacuum. The dried particles were added to 40°C tetrahydrofuran, washed for 15 minutes with stirring, and filtered. This washing procedure was repeated a total of ten times. In this procedure, extraction of only the polyisoprene was confirmed by $^1$H-NMR analysis of the extract. No extract was confirmed after the sixth and subsequent washing runs. That is, there was no residual polyisoprene in the particles. This produced the desired resin composition containing ethylene-vinyl alcohol copolymer and graft copolymer. The result of composition calculation, the result of average particle diameter analysis, and the result of physical property evaluation are presented in Table 1.

Example 5

A commercially available ethylene-vinyl alcohol copolymer (E105 manufactured by Kuraray Co., Ltd.; content ratio of ethylene unit = 44 mol%, mass fraction of ethylene = 33.3 mass%, mass fraction of vinyl alcohol = 66.7 mass%, MFR of 13.0 g/10 min (210°C, load 2,160 g)) was pulverized, and shaken with a 75-$\mu$m mesh sieve and a 212-$\mu$m mesh sieve. The particles trapped between these sieves as a result of shaking were collected to obtain classified particles. An electron beam (30 kGy) was applied to 100 parts by mass of the particles (a moisture content of 0.6 mass%) in a nitrogen atmosphere. Separately, 130 parts by mass of isoprene and 890 parts by mass of tetrahydrofuran were charged into an autoclave equipped with a stirrer, a nitrogen conduit, and a particle inlet, and the system was replaced with nitrogen for 30 minutes with nitrogen bubbling taking place in an ice-cooled state. Thereafter, 100 parts by mass of the ethylene-vinyl alcohol copolymer exposed to the electron beam was added into the autoclave, which was then sealed, and heated until the internal temperature reached 65°C. In a dispersed state in the solution, the copolymer particles were stirred under the heat of 65°C for 300 minutes to perform graft polymerization. After collecting the particles by filtration, the particles were dried overnight at 40°C in a vacuum. The dried particles were added to 40°C tetrahydrofuran, washed for 15 minutes with stirring, and filtered. This washing procedure was repeated a total of ten times. In this procedure, extraction of only the polyisoprene was confirmed by $^1$H-NMR analysis of the extract. No extract was confirmed after the sixth and subsequent washing runs. That is, there was no residual polyisoprene in the particles. This produced the desired resin composition containing ethylene-vinyl alcohol copolymer and graft copolymer. The result of composition calculation, the result of average particle diameter analysis, and the result of physical property evaluation are presented in Table 1.

Example 6

The desired resin composition was obtained in the same manner as in Example 3, except that the polymerization temperature was changed to 80°C. The result of composition calculation, the result of average particle diameter analysis, and the result of physical property evaluation are presented in Table 1.

Example 7

The desired resin composition was obtained in the same manner as in Example 3, except that the polymerization temperature was changed to 40°C. The result of composition calculation, the result of average particle diameter analysis, and the result of physical property evaluation are presented in Table 1.

Example 8

A commercially available ethylene-vinyl alcohol copolymer (F104 manufactured by Kuraray Co., Ltd.; content ratio of ethylene unit = 32 mol%, mass fraction of ethylene = 23.0 mass%, mass fraction of vinyl alcohol = 77.0 mass%, MFR of 10.0 g/10 min (210°C, load 2,160 g)) was pulverized, and shaken with a 425-$\mu$m mesh sieve and a 710-$\mu$m mesh sieve. The particles trapped between these sieves as a result of shaking were collected to obtain classified particles. An electron beam (30 kGy) was applied to 100 parts by mass of the particles (a moisture content of 0.4 mass%) in a nitrogen atmosphere. Separately, 570 parts by mass of isoprene was charged into an autoclave equipped with a stirrer, a nitrogen conduit, and a particle inlet, and the system was replaced with nitrogen for 30 minutes with nitrogen bubbling taking place in an ice-cooled state. Thereafter, 100 parts by mass of the ethylene-vinyl alcohol copolymer exposed to the electron beam was added into the autoclave, which was then sealed, and heated until the internal temperature reached 65°C. In a dispersed state in the isoprene solution, the copolymer particles were stirred under the heat of 65°C for 4 hours to perform graft polymerization. After collecting the particles by filtration, the particles were dried overnight at 40°C in a vacuum. The dried particles were added to 40°C tetrahydrofuran, washed for 15 minutes with stirring, and filtered. This washing procedure was repeated a total of ten times. In this procedure, extraction of only the polyisoprene was confirmed by $^1$H-NMR analysis of the extract. No extract was confirmed after the eighth and subsequent washing runs. That is, there was no residual polyisoprene in the particles. This produced the desired resin composition containing ethylene-vinyl alcohol copolymer and graft copolymer. The result of composition calculation, the result of average particle diameter analysis, and the result of physical property evaluation are presented in Table 1.

Example 9

A commercially available ethylene-vinyl alcohol copolymer (E171 manufactured by Kuraray Co., Ltd.; content ratio of ethylene unit = 44 mol%, mass fraction of ethylene = 33.3 mass%, mass fraction of vinyl alcohol = 66.7 mass%, MFR of 3.3 g/10 min (210°C, load 2,160 g)) was pulverized, and shaken with a 212-$\mu$m mesh sieve and a 425-$\mu$m mesh sieve. The particles trapped between these sieves as a result of shaking were collected to obtain classified particles. An electron beam (30 kGy) was applied to 100 parts by mass of the particles (a moisture content of 0.6 mass%) in a nitrogen atmosphere. Separately, 570 parts by mass of isoprene was charged into an autoclave equipped with a stirrer, a nitrogen conduit, and a particle inlet, and the system was replaced with nitrogen for 30 minutes with nitrogen bubbling taking place in an ice-cooled state. Thereafter, 100 parts by mass of the ethylene-vinyl alcohol copolymer exposed to the electron beam was added into the autoclave, which was then sealed, and heated until the internal temperature reached 65°C. In a dispersed state in the solution, the copolymer particles were stirred under the heat of 65°C for 300 minutes to perform graft polymerization. After collecting the particles by filtration, the particles were dried overnight at 40°C in a vacuum. The dried particles were added to 40°C tetrahydrofuran, washed for 15 minutes with stirring, and filtered. This washing procedure was repeated a total of ten times. In this procedure, extraction of only the polyisoprene was confirmed by $^1$H-NMR analysis of the extract. No extract was confirmed after the sixth and subsequent washing runs. That is, there was no residual polyisoprene in the particles. This produced the desired resin composition containing ethylene-vinyl alcohol copolymer and graft copolymer. The result of composition calculation, the result of average particle diameter analysis, and the result of physical property evaluation are presented in Table 1. FIG. 2 shows an AFM image of a cross section of a pressed film produced from the resin composition by using the method described above.

Example 10

A commercially available polyvinyl alcohol (Poval 5-82 manufactured by Kuraray Co., Ltd.; degree of saponification = 82 mol%, mass fraction of vinyl acetate = 30.0%, mass fraction of vinyl alcohol = 70.0%) was pulverized, and shaken with a 425-$\mu$m mesh sieve and a 710-$\mu$m mesh sieve. The particles trapped between these sieves as a result of shaking were collected to obtain classified particles. An electron beam (30 kGy) was applied to 100 parts by mass of the particles (a moisture content of 0.8 mass%) in a nitrogen atmosphere. Separately, 130 parts by mass of isoprene and 890 parts by mass of methanol were charged into an autoclave equipped with a stirrer, a nitrogen conduit, and a particle inlet, and the system was replaced with nitrogen for 30 minutes with nitrogen bubbling taking place in an ice-cooled state. Thereafter, 100 parts by mass of the ethylene-vinyl alcohol copolymer exposed to the electron beam was added into the autoclave, which was then sealed, and heated until the internal temperature reached 65°C. In a dispersed state in the solution, the copolymer particles were stirred under the heat of 65°C for 4 hours to perform graft polymerization. After collecting the particles by filtration, the particles were dried overnight at 40°C in a vacuum. The dried particles were added to 40°C tetrahydrofuran, washed for 15 minutes with stirring, and filtered. This washing procedure was repeated a total of ten times. In this procedure, extraction of only the polyisoprene was confirmed by $^1$H-NMR analysis of the extract. No extract was confirmed after the sixth and subsequent washing runs. That is, there was no residual polyisoprene in the particles. This produced the desired resin composition containing ethylene-vinyl alcohol copolymer and graft copolymer. The result of composition calculation, the result of average particle diameter analysis, and the result of physical property evaluation are presented in Table 1.

Example 11

An electron beam (30 kGy) was applied to 100 parts by mass of a commercially available ethylene-vinyl alcohol copolymer (E105 manufactured by Kuraray Co., Ltd.; content ratio of ethylene unit = 44 mol%, mass fraction of ethylene = 33.3 mass%, mass fraction of vinyl alcohol = 66.7 mass%, MFR of 13.0 g/10 min (210°C, load 2,160 g), a moisture content of 0.6 mass%) in a nitrogen atmosphere. Separately, 136 parts by mass of isoprene and 900 parts by mass of isopropanol were charged into an autoclave equipped with a stirrer, a nitrogen conduit, and a particle inlet, and the system was replaced with nitrogen for 30 minutes with nitrogen bubbling taking place in an ice-cooled state. Thereafter, 100 parts by mass of the ethylene-vinyl alcohol copolymer exposed to the electron beam was added into the autoclave, which was then sealed, and heated until the internal temperature reached 65°C. In a dispersed state in the solution, the copolymer particles were stirred under the heat of 65°C for 4 hours to perform graft polymerization. After collecting the particles by filtration, the particles were dried overnight at 40°C in a vacuum. The dried particles were added to 40°C tetrahydrofuran, washed for 15 minutes with stirring, and filtered. This washing procedure was repeated a total of ten times. In this procedure, extraction of only the polyisoprene was confirmed by $^1$H-NMR analysis of the extract. No extract was confirmed after the third and subsequent washing runs. That is, there was no residual polyisoprene in the particles. This produced the desired resin composition containing ethylene-vinyl alcohol copolymer and graft copolymer. The result of composition calculation, the result of average particle diameter analysis, and the result of physical property evaluation are presented in Table 1.

Example 12

A commercially available ethylene-vinyl alcohol copolymer (F101 manufactured by Kuraray Co., Ltd.; content ratio of ethylene unit = 32 mol%, mass fraction of ethylene = 23.0 mass%, mass fraction of vinyl alcohol = 77.0 mass%, MFR of 3.8 g/10 min (210°C, load 2,160 g)) was pulverized, and shaken with a 150-μm mesh sieve and a 300-μm mesh sieve. The particles trapped between these sieves as a result of shaking were collected to obtain classified particles. An electron beam (15 kGy) was applied to 100 parts by mass of the particles (a moisture content of 0.5 mass%) in a nitrogen atmosphere. Separately, 570 parts by mass of isoprene, 200 parts by mass of methanol, and 10 parts by mass of water were charged into an autoclave equipped with a stirrer, a nitrogen conduit, and a particle inlet, and the system was replaced with nitrogen for 30 minutes with nitrogen bubbling taking place in an ice-cooled state. Thereafter, 100 parts by mass of the ethylene-vinyl alcohol copolymer exposed to the electron beam was added into the autoclave, which was then sealed, and heated until the internal temperature reached 65°C. In a dispersed state in the solution, the copolymer particles were stirred under the heat of 65°C for 4 hours to perform graft polymerization. After collecting the particles by filtration, the particles were dried overnight at 40°C in a vacuum to obtain the desired resin composition. The result of composition calculation, the result of average particle diameter analysis, and the result of physical property evaluation are presented in Table 1. It is to be noted that the resin composition obtained in Example 12 contains polyisoprene. The content ratio (mass%) of polyisoprene in the resin composition was measured as follows. Specifically, the mass of a collected portion of the resin composition obtained in Example 12 was measured (a total mass of the resin composition). The measured resin composition was then added to 40°C tetrahydrofuran, stirred for 15 minutes with stirring, and filtered to separate particles. This procedure was repeated a total of ten times. In this procedure, extraction of only the polyisoprene was confirmed by $^1$H-NMR analysis of the extract. The extractants from all ten runs of the foregoing procedure were mixed, and the mass of polyisoprene was measured after removing tetrahydrofuran. The content ratio (mass%) of polyisoprene was then calculated from the ratio of the mass of polyisoprene to the total mass of the resin composition.

Example 13

A commercially available ethylene-vinyl alcohol copolymer (E105 manufactured by Kuraray Co., Ltd.; content ratio of ethylene unit = 44 mol%, mass fraction of ethylene = 33.3 mass%, mass fraction of vinyl alcohol = 66.7 mass%, MFR of 13.0 g/10 min (210°C, load 2,160 g)) was pulverized, and shaken with a 212-μm mesh sieve and a 425-μm mesh sieve. The particles trapped between these sieves as a result of shaking were collected to obtain classified particles. An electron beam (30 kGy) was applied to 100 parts by mass of the particles (a moisture content of 0.5 mass%) in a nitrogen atmosphere. Separately, 570 parts by mass of isoprene, 160 parts by mass of methanol, and 40 parts by mass of water were charged into an autoclave equipped with a stirrer, a nitrogen conduit, and a particle inlet, and the system was replaced with nitrogen for 30 minutes with nitrogen bubbling taking place in an ice-cooled state. Thereafter, 100 parts by mass of the ethylene-vinyl alcohol copolymer exposed to the electron beam was added into the autoclave, which was then sealed, and heated until the internal temperature reached 65°C. In a dispersed state in the solution, the copolymer particles were stirred under heat for 4 hours to perform graft polymerization. After filtration, the collected particles were dried overnight at 40°C in a vacuum to obtain the desired resin composition. The result of composition calculation, the result of average particle diameter analysis, and the result of physical property evaluation are presented in Table 1. The resin composition obtained in Example 13 contains polyisoprene. The content ratio (mass%) of polyisoprene in the resin composition was calculated in the same manner as in Example 12.

Comparative Example 1

A commercially available polyvinyl alcohol (Poval 5-82 manufactured by Kuraray Co., Ltd.; degree of saponification 82 mol%, mass fraction of vinyl acetate = 30.0%, mass fraction of vinyl alcohol = 70.0%) was evaluated. The result of average particle diameter analysis, and the result of physical property evaluation are presented in Table 1.

Comparative Example 2

A commercially available ethylene-vinyl alcohol copolymer (F101 manufactured by Kuraray Co., Ltd.; content ratio of ethylene unit = 32 mol%, mass fraction of ethylene = 23.0 mass%, mass fraction of vinyl alcohol = 77.0 mass%, MFR of 3.8 g/10 min (210°C, load 2,160 g)) was pulverized, and the particles were evaluated after classification through sieves (75 μm to 212 μm). The result of average particle diameter analysis, and the result of physical property evaluation are presented in Table 1.

Comparative Example 3

A reaction vessel equipped with a stirrer and a particle inlet was charged with 100 parts by mass of a commercially available ethylene-vinyl alcohol copolymer (F101 manufactured by Kuraray Co., Ltd.; content ratio of ethylene unit = 32 mol%, mass fraction of ethylene = 23.0 mass%, mass fraction of vinyl alcohol = 77.0 mass%, MFR of 3.8 g/10 min (210°C, load 2,160 g)), and 900 parts by mass of dimethyl sulfoxide. These were stirred under the heat of 80°C to completely dissolve, and were cooled to room temperature. In a separate reaction vessel, 24.0 parts by mass of a commercially available maleic anhydride-modified liquid isoprene rubber (LIR-403 manufactured by Kuraray Co., Ltd.), 56.0 parts by mass of tetrahydrofuran, and 0.2 parts by mass of methanol were added. These were stirred under the heat of 50°C to completely dissolve, and were cooled to room temperature. The isoprene rubber solution was dropped onto the ethylene-vinyl alcohol copolymer solution, and the mixture was stirred for 1 hour at the maintained room temperature, and for 3 hours at an elevated temperature of 50°C. After being cooled to room temperature, the resulting solution was dropped onto methanol to precipitate resin. The precipitated resin was collected by filtration, and dried overnight at 40°C in a vacuum. Attempts were made to pulverize the dried resin; however, it was not possible to crush the resin with a centrifugal pulverizer, and the granulation attempt failed. The resin was added to 40°C tetrahydrofuran, washed for 15 minutes with stirring, and filtered to separate particles, followed by removal of tetrahydrofuran from the extractant. However, no extract was confirmed after this procedure. It was determined from this result that there was no residual polyisoprene, and the desired resin composition was obtained. The result of composition calculation, the result of average particle diameter analysis, and the result of physical property evaluation are presented in Table 1. In shaping the resin composition with a biaxial extruder, serious particle agglutination occurred, and it was not possible to stably feed the resin composition, causing the strand to break in a continuous fashion. The resin composition was therefore determined as being not formable.

Comparative Example 4

A commercially available ethylene-vinyl alcohol copolymer (F101 manufactured by Kuraray Co., Ltd.; content ratio of ethylene unit = 32 mol%, mass fraction of ethylene = 23.0 mass%, mass fraction of vinyl alcohol = 77.0 mass%, MFR of 3.8 g/10 min (210°C, load 2,160 g)) was pulverized, and the particles were classified through sieves (425 μm to 710 μm). An electron beam (30 kGy) was applied to 100 parts by mass of the particles (a moisture content of 0.6 mass%). An autoclave equipped with a stirrer, a nitrogen conduit, and a particle inlet was charged with 20 parts by mass of isoprene and 980 parts by mass of methanol, and the system was replaced with nitrogen for 30 minutes with nitrogen bubbling taking place in an ice-cooled state. Thereafter, 100 parts by mass of the ethylene-vinyl alcohol copolymer exposed to the electron beam was added into the autoclave, which was then sealed, and heated until the internal temperature reached 40°C. In a dispersed state in the solution, the copolymer particles were stirred under heat for 4 hours to perform graft polymerization. After filtration, the collected particles were dried overnight at 40°C in a vacuum. The dried particles were added to 40°C tetrahydrofuran, washed for 15 minutes with stirring, and filtered to separate particles, followed by removal of tetrahydrofuran from the extractant. However, no extract was confirmed after this procedure. It was determined from this result that there was no residual polyisoprene, and the desired resin composition was obtained. The result of composition calculation, the result of average particle diameter analysis, and the result of physical property evaluation are presented in Table 1.

Comparative Example 5

An ethylene-vinyl alcohol graft copolymer (B1) was obtained by removing ethylene-vinyl alcohol copolymer (A) from the resin composition obtained in Example 1, using the method described above. Thereafter, 10 parts by mass of a commercially available ethylene-vinyl alcohol copolymer (F101 manufactured by Kuraray Co., Ltd.; content ratio of ethylene unit = 32 mol%, mass fraction of ethylene = 23.0 mass%, mass fraction of vinyl alcohol = 77.0 mass%) was mixed with 90 parts by mass of the ethylene-vinyl alcohol graft copolymer (B1), and the mixture was melted and kneaded at 210°C for 3 minutes with a Labo Plastomill to obtain a compound. The compound was too soft to be pulverized with a centrifugal pulverizer. Accordingly, the compound was cut with a plastic cutter for evaluation. The result of composition calculation, the result of average particle diameter analysis, and the result of physical property evaluation are presented in Table 1. In shaping the resin composition with a biaxial extruder, serious particle agglutination occurred, and it was not possible to stably feed the resin composition, causing the strand to break in a continuous fashion. The resin composition was therefore determined as being not formable. FIG. 3 shows an AFM image of a cross section of a pressed film produced from the resin composition by using the method described above.

[Table 1]

| | Vinyl alcohol polymer (A) | Graft copolymer (B1) | | | | | Resin composition | | | | Result of physical property evaluation | | Result of shape stability evaluation |
|---|---|---|---|---|---|---|---|---|---|---|---|---|---|
| | Polymer species | Type of main-chain polymer | Type of side-chain diene rubber | Mass ratio of main chain to side chain | Vinyl alcohol unit | (A)/(B1) mass ratio | Synthetic rubber (C) | Total degree of modification | Average particle diameter | Tm | Tensile elastic modulus | Strand break counts |
| | | | | | [Mass%] | | [Mass%] | [mol%] | [$\mu$m] | [°C] | [kgf/mm$^2$] | [Times] |
| Example 1 | EVOH | EVOH | Polyisoprene | 32.7/67.3 | 25.0 | 59.2/40.8 | 0.0 | 19.7 | 586 | 182 | 83 | 1 |
| Example 2 | EVOH | EVOH | Polyisoprene | 72.5/27.5 | 55.8 | 67.8/32.2 | 0.0 | 4.0 | 109 | 183 | 236 | 0 |
| Example 3 | EVOH | EVOH | Polyisoprene | 61.7/38.3 | 47.5 | 67.7/32.3 | 0.0 | 7.7 | 112 | 182 | 199 | 1 |
| Example 4 | EVOH | EVOH | Polyisoprene | 37.8/62.2 | 25.2 | 45.9/54.1 | 0.0 | 21.6 | 344 | 162 | 31 | 1 |
| Example 5 | EVOH | EVOH | Polyisoprene | 33.0/67.0 | 22.0 | 75.6/24.4 | 0.0 | 8.4 | 101 | 164 | 109 | 0 |
| Example 6 | EVOH | EVOH | Polyisoprene | 50.5/49.5 | 38.7 | 65.3/34.7 | 0.0 | 10.6 | 117 | 182 | 146 | 0 |
| Example 7 | EVOH | EVOH | Polyisoprene | 34.6/65.4 | 26.2 | 85.6/14.4 | 0.0 | 5.6 | 101 | 183 | 230 | 0 |
| Example 8 | EVOH | EVOH | Polyisoprene | 44.5/55.5 | 34.3 | 41.7/58.3 | 0.0 | 20.1 | 602 | 181 | 66 | 1 |
| Example 9 | EVOH | EVOH | Polyisoprene | 18.7/81.3 | 12.5 | 48.6/51.4 | 0.0 | 24.9 | 297 | 160 | 29 | 5 |
| Example 10 | PVOH | PVOH | Polyisoprene | 24.4/75.6 | 24.2 | 59.5/40.5 | 0.0 | 22.3 | 610 | 159 | 42 | 2 |
| Example 11 | EVOH | EVOH | Polyisoprene | 65.7/34.3 | 50.4 | 60.6/39.4 | 0.0 | 8.1 | 3250 | 164 | 115 | 0 |

| | Vinyl alcohol polymer (A) | Graft copolymer (B1) | | | | Resin composition | | | Average particle diameter | Result of physical property evaluation | | Result of shape stability evaluation |
|---|---|---|---|---|---|---|---|---|---|---|---|---|
| | Polymer species | Type of main-chain polymer | Type of side-chain diene rubber | Mass ratio of main chain to side chain | Vinyl alcohol unit | (A)/(B1) mass ratio | Synthetic rubber (C) | Total degree of modification | Average particle diameter | Tm | Tensile elastic modulus | Strand break counts |
| | | | | | [Mass%] | | [Mass%] | [mol%] | [μm] | [°C] | [kgf/mm²] | [Times] |
| Example 12 | EVOH | EVOH | Polyisoprene | 37.3/62.7 | 28.8 | 59.9/40.1 | 6.4 | 19.5 | 212 | 181 | 69 | 5 |
| Example 13 | EVOH | EVOH | Polyisoprene | 49.9/50.1 | 33.1 | 39.9/60.1 | 11.0 | 25.0 | 305 | 161 | 37 | 11 |
| Polymer species | Type of main-chain polymer | Type of side-chain diene rubber | Mass ratio of main chain to side chain | Vinyl alcohol unit | (A)/(B 1) mass ratio | Synthetic rubber (C) | Total degree of modification | Average particle diameter | Tm | Tensile elastic modulus | Strand break counts | |
| | | | | [Mass%] | | [Mass%] | [mol%] | [μm] | [°C] | [kgf/mm²] | [Times] | |
| Com. Ex. 1 | PVOH | - | - | - | - | 100/0 | - | - | 725 | 161 | 434 | 0 |
| Com. Ex. 2 | EVOH | - | - | - | - | 100/0 | - | - | 113 | 183 | 332 | 0 |
| Com. Ex. 3[a] | - | EVOH | Maleic anhydride-modified polyisoprene | 72.5/27.5 | 55.8 | 0/100 | 0.0 | 17.8 | (Unmeasurable) | (Peak top is unrecognizable) | 41 | (Not formable) |
| Com. Ex. 4 | EVOH | EVOH | Polyisoprene | 68.3/31.7 | 52.4 | 94.1/5.9 | 0.0 | 1.1 | 578 | 183 | 329 | 0 |
| Com. Ex. 5 | EVOH | EVOH | Polyisoprene | 32.8/67.2 | 25.3 | 10.0/90.0 | 0.0 | 46.8 | (Unmeasurable) | (Peak top is unrecognizable) | (Unmeasurable) | (Not formable) |

[a] Side chain is bound to oxygen atom of vinyl alcohol unit
In the table, EVOH means ethylene-vinyl alcohol copolymer, and PVOH means polyvinyl alcohol.

[Table 2]

| Resin composition | Electron beam irradiation | OTR |
|---|---|---|
| | | [cc.20 $\mu$m/m$^2$.day.atm] |
| Example 3 | Absent | 0.4 |
| Example 4 | Absent | 5.5 |
| | Present | <0.1 |
| Example 6 | Absent | 2.6 |
| Example 9 | Absent | 40.2 |
| Com. Ex. 5 | Absent | (Beyond upper detection limit) |

[Table 3]

| Resin composition | Maximum stress at detachment [kgf/cm$^2$] |
|---|---|
| Example 1 | 1.0 |
| Example 4 | 2.4 |
| Example 5 | 1.2 |
| Example 7 | 0.7 |
| Example 8 | 2.5 |
| Example 9 | 2.6 |
| Example 10 | 1.4 |
| Example 11 | 1.1 |
| Example 12 | 2.7 |
| Example 13 | 2.5 |
| Com. Ex. 2 | 0.1 |
| Com. Ex. 4 | 0.1 |

[Table 4]

| Resin composition | Before electron beam irradiation | | After electron beam irradiation | |
|---|---|---|---|---|
| | Tensile elastic modulus [kgf/cm$^2$] | Tensile elongation [%] | Tensile elastic modulus [kgf/cm$^2$] | Tensile elongation [%] |
| Example 4 | 31 | 34 | 30 | 106 |
| Com. Ex. 1 | 434 | 9 | 311 | 4 |
| Com. Ex. 2 | 332 | 5 | 309 | 5 |

[Table 5]

| Resin composition | Before chemical durability test | After chemical durability test | |
|---|---|---|---|
| | Tensile elastic modulus [kgf/cm$^2$] | Tensile elastic modulus [kgf/cm$^2$] | |
| Example 1 | 83 | 97 | |
| Example 4 | 31 | 42 | |

(continued)

| Resin composition | Before chemical durability test | After chemical durability test | |
|---|---|---|---|
| | Tensile elastic modulus [kgf/cm$^2$] | Tensile elastic modulus [kgf/cm$^2$] | |
| Example 9 | 29 | 38 | |
| Com. Ex. 3 | 41 | 211 | |

As can be clearly seen from the foregoing Examples, the resin compositions of the present invention are flexible while maintaining high crystallinity, and the shape stability is desirable. The resin compositions of the present invention should therefore be able to form an article that is more flexible and less likely to crack than traditional vinyl alcohol polymers. As is clear from the OTR measurement results shown in Table 2, the resin compositions of the present invention also develop excellent barrier performance owning to the high crystallinity. As is clear from the results of the adhesiveness evaluation against rubber shown in Table 3, the resin compositions of the present invention also develop excellent adhesiveness against rubber owning to the structure of the introduced diene polymer. It also can be clearly seen from the results of the mechanical property evaluation of the formed film before and after electron beam irradiation shown in Table 4 that the resin compositions of the present invention can develop markedly high toughness while being soft, owning to the crosslinkage of graft chains by high-energy radiation. As is also clear from the results of chemical durability evaluation shown in Table 5, the resin compositions of the present invention can stably develop flexibility as a result of the graft chain not decomposing or not detaching itself even in an alkaline environment. It can also be seen from FIGS. 1 and 2 that the size of the phase separation at the soft component (white portions) can be controlled by controlling the content ratio of copolymer (B) with respect to the total mass of vinyl alcohol polymer (A) and copolymer (B), making it possible to achieve both flexibility and crystallinity. This makes the resin compositions of the present invention applicable to a wide range of vinyl alcohol resin applications.

As shown in Comparative Examples 1 and 2, the unmodified vinyl alcohol polymer has a high elastic modulus, making the polymer hard and brittle. Such polymers do not develop adhesiveness against rubber, and fail to crosslink in response to high-energy radiation, as shown in Table 3. As shown in Comparative Example 3, the copolymer obtained by grafting polyisoprene to vinyl alcohol polymer, by itself, shows serious decrease of crystallinity, impairing barrier properties. As shown in Comparative Examples 4 and 5, the resin compositions in which the mixed proportions (mass ratio) of vinyl alcohol polymer (A) and copolymer (B) fall outside of the range of the present invention lack sufficient flexibility, and the low crystallinity results in poor mechanical strength and poor barrier properties. As can be seen from FIG. 3, when the content of copolymer (B) with respect to the total mass of vinyl alcohol polymer (A) and copolymer (B) falls outside of the specific proportion range of the present invention, phase separation does not occur, and the composition becomes soft as a whole, making it difficult to satisfy flexibility and crystallinity at the same time.

INDUSTRIAL APPLICABILITY

The resin composition of the present invention satisfies both high crystallinity and excellent flexibility while ensuring desirable workability. This makes the resin composition of the present invention applicable to a wide range of applications, including, for example, shaped articles (e.g., films, sheets, boards, and fibers), multilayer structures (e.g., inner liners for tires), additives (e.g., additives for tires), compatibilizing agents, coating agents, barrier materials, sealing agents (e.g., metal sealants), and adhesives.

**Claims**

1. A resin composition comprising a vinyl alcohol polymer (A) and a copolymer (B), wherein the copolymer (B) comprises a vinyl alcohol polymer (B-1) region and a diene polymer (B-2) region, and has a content ratio of 10 to 70 mass% with respect to a total mass of the vinyl alcohol polymer (A) and the copolymer (B), the resin composition having a powder or pellet form, and an average particle diameter of 50 to 4,000 μm.

2. The resin composition according to claim 1, wherein the resin composition further comprises a synthetic rubber (C) in an amount of 10 mass% or less.

3. The resin composition according to claim 1, wherein the resin composition further comprises a synthetic rubber (C) in an amount of 0.1 mass% or less.

4. The resin composition according to any one of claims 1 to 3, wherein the diene polymer (B-2) region in the copolymer (B) has a content ratio of 30 to 80 mass% with respect to a total mass of the vinyl alcohol polymer (B-1) region and the diene polymer (B-2) region in the copolymer (B).

5. The resin composition according to any one of claims 1 to 4, wherein the copolymer (B) comprises a vinyl alcohol structure unit in a content ratio of 15 to 60 mass% with respect to all constituent structure units of the copolymer (B).

6. The resin composition according to any one of claims 1 to 5, wherein the diene polymer (B-2) is at least one selected from the group consisting of polybutadiene, polyisoprene, and polyisobutylene.

7. The resin composition according to any one of claims 1 to 6, wherein the diene polymer (B-2) is polyisoprene.

8. The resin composition according to any one of claims 1 to 7, wherein part or all of the diene polymer (B-2) is directly bound to a carbon atom constituting the vinyl alcohol polymer (B-1).

9. The resin composition according to any one of claims 1 to 8, wherein the vinyl alcohol polymer (B-1) is an ethylene-vinyl alcohol copolymer.

10. The resin composition according to any one of claims 1 to 9, wherein the vinyl alcohol polymer (A) is an ethylene-vinyl alcohol copolymer.

11. The resin composition according to any one of claims 1 to 10, wherein the copolymer (B) is a graft copolymer (B1).

12. The resin composition according to any one of claims 1 to 11, wherein the resin composition has an average particle diameter of 90 to 3,300 $\mu$m.

13. A method for producing a resin composition, comprising:

a step of applying an active energy ray to a vinyl alcohol polymer; and
a step of dispersing the vinyl alcohol polymer in a feedstock monomer of diene polymer (B-2) or in a solution comprising the monomer after the exposure to the active energy ray so as to perform graft polymerization, the method producing a resin composition that comprises a vinyl alcohol polymer (A) and a graft copolymer (B1), wherein the vinyl alcohol polymer (A) is an unreacted vinyl alcohol polymer after the graft polymerization, and the graft copolymer (B1) comprises a vinyl alcohol polymer (B-1) region and a diene polymer (B-2) region, the graft copolymer (B1) having a content ratio of 10 to 70 mass% with respect to a total mass of the vinyl alcohol polymer (A) and the graft copolymer (B1), the resin composition having a powder or pellet form, and an average particle diameter of 50 to 4,000 $\mu$m.

14. The method according to claim 13, wherein the active energy ray is a 5 to 200 kGy electron beam.

15. The method according to claim 13 or 14, wherein the method comprises a step of removing a synthetic rubber (C) after the graft polymerization step, and the synthetic rubber (C) has a content ratio of 0.1 mass% or less after the removal step.

FIG.1

FIG.2

FIG.3

<table>
<tr><td colspan="2" align="center">**INTERNATIONAL SEARCH REPORT**</td><td colspan="2">International application No.<br>PCT/JP2018/024908</td></tr>
</table>

**A. CLASSIFICATION OF SUBJECT MATTER**
Int.Cl. C08L29/04(2006.01)i, C08F2/44(2006.01)i, C08F261/04(2006.01)i,
C08K9/00(2006.01)i, C08L51/06(2006.01)i

According to International Patent Classification (IPC) or to both national classification and IPC

**B. FIELDS SEARCHED**

Minimum documentation searched (classification system followed by classification symbols)
Int.Cl. C08L29/04, C08F2/44, C08F261/04, C08K9/00, C08L51/06

Documentation searched other than minimum documentation to the extent that such documents are included in the fields searched
Published examined utility model applications of Japan       1922–1996
Published unexamined utility model applications of Japan    1971–2018
Registered utility model specifications of Japan             1996–2018
Published registered utility model applications of Japan     1994–2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 41-021994 B1 (KURASHIKI RAYON CO., LTD.) 22 December 1966, claims, page 1, left column, lines 1-9, page 2, left column, lines 6-12, page 2, left column, lines 17-20, examples 1-2 (Family: none) | 1–15 |
| A | JP 46-020587 B1 (KURARAY CO., LTD.) 10 June 1971, entire specification (Family: none) | 1–15 |
| A | JP 39-006386 B1 (JAPANESE ASSOCIATION FOR RADIATION RESEARCH ON POLYMERS) 04 May 1964, entire specification (Family: none) | 1–15 |
| A | WO 2015/190029 A1 (BRIDGESTONE CORPORATION) 17 December 2015, entire specification & JP 2016-797 A & US 2017/0121465 A1, entire specification & EP 3156437 A1 & CN 106459422 A | 1–15 |

☐  Further documents are listed in the continuation of Box C.      ☐  See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search<br>    03 September 2018 (03.09.2018) | Date of mailing of the international search report<br>    11 September 2018 (11.09.2018) |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015190029 A
- JP 396386 A
- JP 4121994 B